## Europäisches Patentamt

## European Patent Office

## Office européen des brevets

(19)

(11) Veröffentlichungsnummer: **0 058 974**
A1

(12)

# EUROPÄISCHE PATENTANMELDUNG

(21) Anmeldenummer: 82101307.5

(22) Anmeldetag: 19.02.82

(51) Int. Cl.³: **C 02 F 3/12,** C 02 F 3/30, C 02 F 3/10

(30) Priorität: 21.02.81 DE 3106465

(43) Veröffentlichungstag der Anmeldung: 01.09.82 Patentblatt 82/35

(84) Benannte Vertragsstaaten: IT

(71) Anmelder: Menzel GmbH. + Co., Hedelfinger Strasse 95, D-7000 Stuttgart 60 (DE)

(72) Erfinder: Zink, Jürgen, Schilfweg 3, D-7000 Stuttgart 70 (DE)

(74) Vertreter: Grupe, Peter, Dipl.-Ing. et al, Patentanwaltsbüro Tiedtke-Bühling-Kinne-Grupe-Pellmann-Grams Bavariaring 4, D-8000 München 2 (DE)

(54) Verfahren, Vorrichtung und Mittel zur Abwasserreinigung.

(57) Bei diesem Verfahren zur Abwasserreinigung werden in einem Belebungsbecken (2), das Abwasser (7) mit Belebtschlamm enthält, Bewuchskörper (11), die mit der Nitrifikation des Abwassers (7) dienender Biomasse behaftet sind, durch eine solche Strömung (10) im Abwasser (7) in Schwebe gehalten, dass die Bewuchskörper (11) im wesentlichen wirbelschichtfrei zirkulieren.

TIEDTKE – BÜHLING – KINNE
GRUPE – PELLMANN – GRAMS

Patentanwälte und
Vertreter beim EPA
Dipl.-Ing. H. Tiedtke
Dipl.-Chem. G. Bühling
Dipl.-Ing. R. Kinne
Dipl.-Ing. P. Grupe
Dipl.-Ing. B. Pellmann
Dipl.-Ing. K. Grams

Bavariaring 4, Postfach 20 24 0[
8000 München 2
Tel.: 0 89 - 53 96 53
Telex: 5-24 845 tipat
cable: Germaniapatent Münche[

0058974

- 1 -

Menzel GmbH & Co.

Stuttgart

5. Mai 1982

Nr. 82 101 307.5

EP 1925

## Verfahren, Vorrichtung und Mittel zur Abwasserreinigung

Die Erfindung betrifft ein Verfahren zur Abwasserreinigung nach dem Oberbegriff des Anspruchs 1.

Zur teilweisen oder vollständigen Nitrifikation des Abwassers sind Anlagen bekannt, die als sogenannte Schwachlastanlagen ausgeführt sind. Bei derartigen Schwachlastanlagen wird aufgrund einer nur geringen Schlammbelastung
ein verhältnismäßig hohes Schlammalter erreicht, so daß
bei längerer Verweilzeit eine ausreichende Vermehrung
der Nitrifikanten möglich ist. Außerdem ist die Nitrifikationsgeschwindigkeit auch stark von der Temperatur
des Abwassers abhängig. Ist die Temperatur gering, so
verläuft der Nitrifikationsprozeß entsprechend langsam.
Deshalb ist es insbesondere aufgrund der im nordeuropäischen Raum über längere Zeitabschnitte vorherrschenden
niedrigen Außen- und Abwassertemperaturen zur Erreichung
einer ausreichenden Nitrifikation bisher erforderlich,
die Verweilzeiten entsprechend zu verlängern, was bedingt, daß zur Erzielung eines ausreichenden Abwasserdurchsatzes die Abwasserreinigungsanlage entsprechend
großvolumig auszuführen ist. Dies bedeutet, daß in der
Praxis sowohl hohe Investitionskosten zur Erstellung

0058974

der Anlage als auch hohe Betriebskosten zur Durchführung der Nitrifikation bereitzustellen sind. Darüber hinaus sind zur Reinigung des Abwassers auch sogenannte Hochlastanlagen bekannt. Diese Hochlastanlagen können zwar wesentlich kleiner ausgeführt sein, doch ist hierbei die Verweilzeit sehr gering, so daß praktisch keine Nitrifikation stattfinden kann.

Die Aufgabe der Erfindung besteht darin, ein Verfahren zur Abwasserreinigung nach dem Oberbegriff des Anspruchs 1 so durchzuführen, daß eine kleinvolumige Anlagenausführung mit hoher Nitrifikationsleistung erzielt wird und eine Kosteneinsparung bei der Herstellung und während des Betriebs der Reinigungsanlage möglich ist.

Gemäß der Erfindung wird diese Aufgabe dadurch gelöst, daß in einem Belebtschlamm enthaltenden Belebungsbecken mit Biomasse behaftete Bewuchskörper durch eine Strömung des Abwassers schwebeartig und im wesentlichen wirbelschichtfrei zirkulieren.

Vorteilhafte Ausgestaltungen und Weiterbildungen der Erfindung sind den Merkmalen der Unteransprüche zu entnehmen.

Durch die Erfindung wird die Abwasserbehandlung im Belebungsbecken praktisch im System eines Mehrphasenreaktors durchgeführt, wobei zwei unterschiedliche Schlämme, nämlich der Belebtschlamm und die mit der Biomasse behafteten Bewuchskörper gehalten werden. Damit ist die Möglichkeit gegeben, die Leistungsfähigkeit zur Nitrifikation des Abwassers um ein Vielfaches zu steigern, so daß das Belebungsbecken kostengünstig klein ausgeführt werden kann, wobei gleichzeitig eine Reduzierung der Betriebskosten gegeben ist. Ein weiterer Vorteil besteht darin, daß die als ausgesprochen preiswertes Schüttgut in das Belebungsbecken eingebrachten Bewuchskörper eine hohe Standfestigkeit aufweisen, so daß die daran haftenden Nitrifikanten eine lange Lebensdauer besitzen. Dies wird durch die schwebeartig wirbelschichtfreie Zirkulation der Bewuchskörper im Abwasser des Belebungsbeckens gefördert, da aufgrund dieser durch die Strömung des Abwassers erzielte Bewuchskörperzirkulation ein weitgehend abriebfreier Lineartransport der Bewuchskörper im Abwasser gegeben ist. Bei der Biomasse handelt es sich im wesentlichen um sogenannte sessile Bakterien, die sich vorzugsweise an der Oberfläche der Bewuchskörper ansiedeln. Die Nitrifikanten können somit an der Oberfläche der Bewuchskörper, die durch geeignete Vorkehrungen am Austrag aus dem Belebungsbecken gehindert werden, wachsen und sich vermehren. Das für das Wachstum der Nitrifikanten notwendige Schlammalter wird somit dadurch erreicht, daß die Bewuchskörper mit den daran haftenden Nitrifikanten im Belebungsbecken verbleiben, während der normale Belebtschlamm, wie bei einer Hochlastanlage üblich, als Überschußschlamm mit relativ geringem Schlammalter ausgetragen wird.

Das zu reinigende Abwasser kann vor der Einleitung in das Belebungsbecken durch einen Rechen fließen. Um auch Faserstoffe zur Vermeidung von Betriebsstörungen vom Belebungsbecken fernzuhalten, kann am Zulauf der Anlage statt eines konventionellen Rechens ein sogenannter Feinrechen oder eine Siebvorrichtung (Trommelsieb, Bogensieb od. dgl.) vorgesehen werden. Das Abwasser kann anschließend über einen Sandfang fließen, wobei es günstig sein kann, den Sand am Eintritt in das Belebungsbecken durch entsprechende Maßnahmen zu hindern, da andernfalls der in das Belebungsbecken getragene Sand von Zeit zu Zeit zu entfernen ist. Es ist aber auch möglich, auf einen Sandfang völlig zu verzichten und das Abwasser gleich in das Belebungsbecken einzuleiten. Im Belebungsbecken kann das Abwasser vorteilhaft mit einer Begasungsvorrichtung mittels Luftsauerstoff oder auch Reinsauerstoff begast werden, wobei

0058974

die Belüftung vorzugsweise von unten erfolgen kann, aber auch durch andere Belüftungssysteme wie zum Beispiel Oberflächenbelüfter und dergleichen durchgeführt werden kann.

Die Zirkulation des Abwasser-Schlamm-Bewuchskörper-Gemisches kann vorteilhaft mit einem getrennt angeordneten, mechanischen Wasserverdränger wie zum Beispiel Propeller mit minimalem Energieaufwand durchgeführt werden. Dazu kann der Sauerstoffeintrag genau dosiert und abgestimmt, beispielsweise durch eine Sauerstoffelektrode geregelt, optimal angepaßt werden, so daß ein ausgesprochen wirtschaftlicher Hochleistungsbetrieb erzielt wird. Das Abwasser gelangt anschließend über eine Bewuchskörper-Abscheidevorrichtung in ein Nachklärbecken. Aus dem Nachklärbecken kann der Schlamm als Rücklaufschlamm dem Belebungsbecken zurückgeführt werden, oder aber als Überschußschlamm aus dem System entnommen werden.

Die Abscheidevorrichtung kann aus einem Siebbelag mit entsprechendem Lochdurchmesser bestehen. Die Reinigung des Siebbelages kann selbsttätig durch eine Anordnung im Abwasser erfolgen, wobei durch die die Zirkulation der Bewuchskörper bewirkende Strömung etwaige Feststoffe vom Siebbelag fortgetragen werden. Die Reinigung kann noch dadurch unterstützt werden, daß beispielsweise auf der Rückseite des Siebbelages eine Sprühvorrichtung angeordnet ist, die in gewissen Zeitintervallen eingeschaltet wird und am Siebbelag fester haftende Partikel schonend entfernt.

Die Zirkulation der Bewuchskörper kann vorteilhaft ringartig linear in horizontaler Richtung verlaufen. Dabei kann die schwebeartige Zirkulation durch zusätzliche Begasungen von unten, die zweckmäßig in bestimmten Entfernungen zueinander im Belebungsbecken angeordnet sind, unterstützt werden, so daß ein Absetzen am Boden des Belebungsbeckens praktisch nicht möglich ist. Mit dem er-

findungsgemäßen Verfahren ist es auch möglich, bei fortdauernder Zirkulation der Bewuchskörper eine Denitrifikation des Abwassers im Belebungsbecken vorzunehmen, indem eine Reduzierung bzw. völlige Abschaltung der Sauerstoffzufuhr im Belebungsbecken vorgenommen wird. In der Praxis dürfte es günstig sein, das Verfahren so auszulegen, daß die Verweilzeit des Belebtschlamms im Abwasser des Belebungsbeckens wesentlich geringer ist als die Verweilzeit der schwebeartig zirkulierenden Bewuchskörper, die durchaus über viele Monate im Belebungsbecken verbleiben können.

Zur Aufrechterhaltung der Schwebezirkulation der Bewuchskörper kann es auch günstig sein, einen mit einem Bewuchskörperauftriebschild ausgestatteten Räumbalken über den Boden des Belebungsbeckens zu führen, wobei zur weiteren Unterstützung der Schwebezirkulation über dem Bewuchskörperauftriebschild des Balkens eine Belüfterkerze oder dergleichen angeordnet sein kann, so daß die Bewuchskörper durch die hier austretenden Feinstluftblasen einen weiteren Auftriebsimpuls erhalten.

Die erfindungsgemäßen Bewuchskörper können vorteilhaft aus Kunststoff hergestellt sein. Dabei kann das Gewicht so bemessen werden, daß es geringfügig größer ist als das spezifische Gewicht des Abwassers, so daß ein Schwimmauftrieb und eine Ansammlung an der Oberfläche des Wassers nicht auftritt, sondern im wesentlichen eine weitgehend konstante Schwebezirkulation erreicht wird. Die Bewuchskörper selbst können verschiedenartig ausgeführt sein. So kann es zweckmäßig sein, die Bewuchskörper aus zwei Bewuchsplatten zu bilden, die Schlitze aufweisen und kreuzförmig zusammensteckt sind, wodurch eine verhältnismäßig große Gesamtoberfläche erzielt wird. Auch ist es möglich, die Bewuchskörper als Hohlkugeln auszubilden und die Wandung dabei mit Löchern zu versehen. Nach einer anderen Ausführung kann es günstig sein, die Außenwandung der Bewuchskörper mit Mulden zu versehen, in denen die Biomasse weitgehend geschützt gelagert ist, was insbesondere dadurch zu erreichen ist, daß die Bewuchskörper igelkugelförmig gestaltet werden und eine Vielzahl abstrebender Trägerteile aufweist. Die Größe der Bewuchskörper kann sehr unterschiedlich sein und zum Beispiel im Bereich zwischen 0,2 mm bis 50 mm Durchmesser liegen, so daß eine den unterschiedlichen Anforderungen entsprechende Bewuchskörperauswahl zum optimalen Einsatz gelangen kann, wobei es auch möglich ist, nicht nur Bewuchskörper einer Größe bzw. Gestaltungsform zu verwenden, sondern verschieden große und unterschiedlich gestaltete Bewuchskörper zu mischen und in einem einzigen Belebungsbecken schwebeartig zirkulieren zu lassen.

Weitere Vorteile und Einzelheiten der Erfindung sind der nachfolgenden Beschreibung und der Zeichnung zu entnehmen, die in schematischer Darstellung bevorzugte Ausführungsformen als Beispiel zeigt. Es stellen dar:

Fig. 1  eine geschnittene Seitenansicht einer erfindungsgemäßen Abwasserreinigungsanlage,

Fig. 2  eine Draufsicht auf die Abwasserreinigungsanlage der Fig. 1,

Fig. 3  eine Teilschnittseitenansicht der Abwasserreinigungsanlage der Fig. 2 in Richtung des Pfeiles III,

Fig. 4  eine Sprengdarstellung eines erfindungsgemäßen Zweiplatten-Bewuchskörpers,

Fig. 5  eine Sprengdarstellung des Zweiplatten-Bewuchskörpers gemäß Fig. 4, jedoch um 90° gedreht,

Fig. 6 eine Schnittansicht eines hohlkugelförmigen Bewuchskörpers,

Fig. 7 eine Darstellung eines mit Außenmulden versehenen Bewuchskörpers und

Fig. 8 eine Darstellung eines mit abstrebenden Trägerteilen igelkugelförmig gestalteten Bewuchskörpers.

Die in der Zeichnung dargestellte Abwasserreinigungsanlage 1 weist ein als kreisrunden Horizontalring ausgebildetes Belebungsbecken 2 sowie ein Nachklärbecken 3 auf, das vom Belebungsbecken 2 durch eine Ringwand 4 begrenzt ist. Eine um eine mittlere Vertikalachse 5 drehbare Brücke 6 überspannt das Belebungsbecken 2 und das Nachklärbecken 3.

Das zu reinigende Abwasser 7 wird über einen Zulauf 8 in das Belebungsbecken 2 eingeleitet. Durch einen im Belebungsbecken 2 angeordneten Propeller 9 wird eine Strömung 10 erzeugt, durch die das Abwasser 7 mit dem Belebtschlamm im Belebungsbecken 2 horizontalringartig zirkuliert. Gleichzeitig zirkulieren mit dieser Strömung 10 im Belebungsbecken 2 Bewuchskörper 11 schwebeartig und weitgehend wirbelschichtfrei. Die Bewuchskörper 11 sind mit Biomasse behaftet, die eine beschleunigte Nitrifikation des Abwassers 7 bewirkt. Aufgrund der schwebeartig wirbelschichtfreien Zirkulation der Bewuchskörper 11 ist ein mechanischer Abrieb der Biomasse praktisch vermieden, wodurch eine hohe Lebensdauer gegeben ist, denn die Bewuchskörper 11 werden fast nur linear in gleicher Richtung bewegt und können deshalb kaum aneinanderreiben.

Im Belebungsbecken 2 befinden sich weiterhin Belüfter 12, die in Abständen verteilt angeordnet sind. Über die Belüfter 12 kann Sauerstoff in das Abwasser 7 eingeblasen werden, wodurch zudem die Schwebezirkulation der Bewuchskörper 11 unterstützt werden kann.

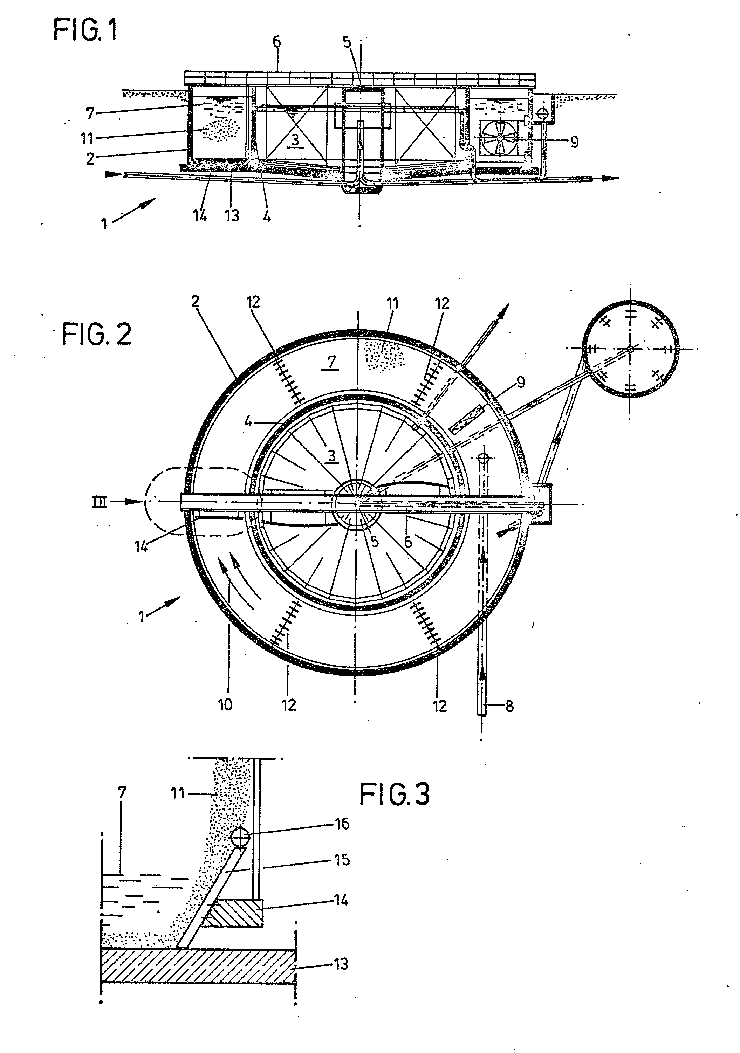

Insbesondere der Fig. 3 ist zu entnehmen, daß an einem über den Boden 13 des Belebungsbeckens 2 geführten Balken 14 der drehbaren Brücke 6 ein Bewuchskörperauftriebschild 15 befestigt ist und etwas geneigt verläuft. Über dem Bewuchskörperauftriebschild 15 ist eine weitere Belüfterkerze 16 angeordnet. Durch den Bewuchskörperauftriebschild 15 werden evtl. abgesetzte Bewuchskörper 11 hochgetragen. Durch die an der Belüfterkerze 16 austretenden Luftblasen erhalten die Bewuchskörper 11 einen weiteren Auftriebsimpuls, so daß im wesentlichen eine weitgehend gleichmäßige Schwebezirkulation der Bewuchskörper 11 im Abwasser 7 gegeben ist.

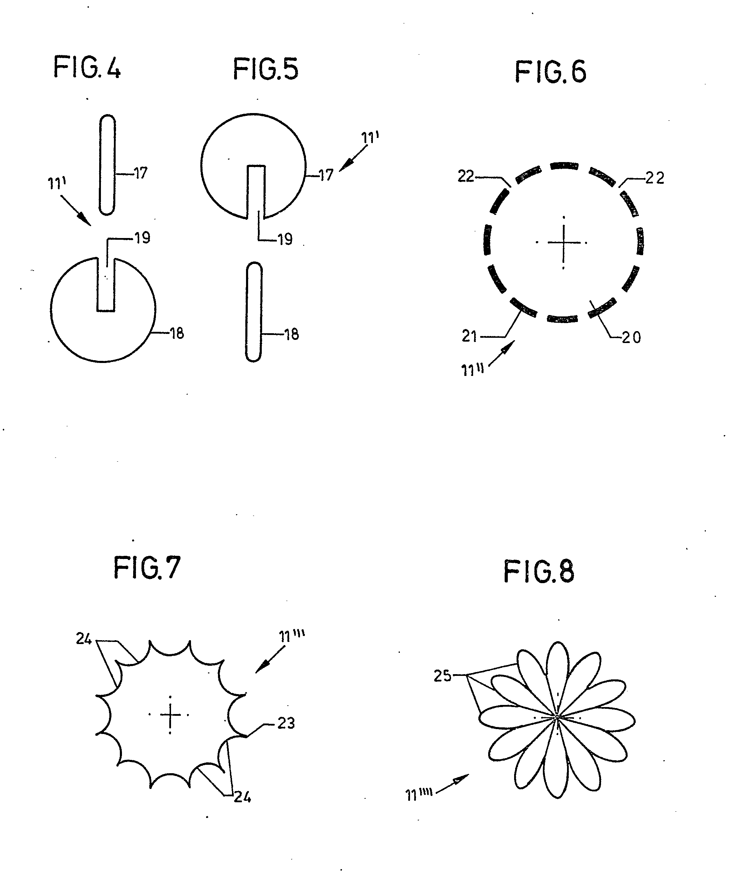

Die in den Fig. 4 bis 8 dargestellten Bewuchskörper 11', 11'', 11''', 11'''' bestehen aus Kunststoff und besitzen ein solches Gewicht, das etwas größer ist als das spezifische Gewicht des Abwassers 7, so daß die mit Biomasse behafteten Bewuchskörper 11 im wesentlichen im Schwebezustand verbleiben und evtl. nur sehr langsam nach unten absinken, jedoch nicht an der Wasseroberfläche schwimmen. Es ist zwar grundsätzlich auch möglich, für die Bewuchskörper 11 ein anderes Material zu verwenden, doch ist die Herstellung aus entsprechendem Kunststoff sowohl für den Bewuchs mit Biomasse als auch bezüglich der Herstellungskosten und Lebensdauer eine besonders günstige Möglichkeit. Die Bewuchskörper 11' bestehen aus zwei Bewuchsplatten 17, 18, die gleich ausgeführt sind und einen Schlitz 19 aufweisen. Die Bewuchsplatten 17, 18 werden im Bereich der Schlitze 19 kreuzförmig zusammengesteckt. Der

0058974

Bewuchskörper 11'' ist als Hohlkugel 20 ausgeführt. Die Wandung 21 der Hohlkugel 20 weist durchgehende Löcher 22 auf, so daß das Abwasser 7 in die Hohlkugel 20 eindringen kann und auch an der Innenfläche der Wandung 21 Nitrifikanten wachsen können. Der Bewuchskörper 11''' der Fig. 7 besitzt eine Wandung 23, die an der Außenfläche Mulden 24 aufweist, in denen die Biomasse abriebgeschützt haften kann. Die Fig. 8 zeigt einen Bewuchskörper 11'''', der in Form einer Igelkugel ausgeführt ist und dazu eine Vielzahl abstrebender Trägerteile 25 für die Anhaftung der Biomasse besitzt.

**0058974**

Patentanwälte und
Vertreter beim EPA
Dipl.-Ing. H. Tiedtke
Dipl.-Chem. G. Bühling
Dipl.-Ing. R. Kinne
Dipl.-Ing. P. Grupe
Dipl.-Ing. B. Pellmann
Dipl.-Ing. K. Grams

Bavariaring 4, Postfach 20 24 03
8000 München 2
Tel.: 0 89 - 53 96 53
Telex: 5-24 845 tipat
cable: Germaniapatent München

– 10 –

**5. Mai 1982**

Patentansprüche
=================

**Nr. 82 101 307.5**

**EP 1925**

1. Verfahren zur Abwasserreinigung, dadurch gekennzeichnet, daß in einem Belebtschlamm enthaltenden Belebungsbecken (2) mit Biomasse behaftete Bewuchskörper (11) duch eine Strömung (10) des Abwassers (7) schwebeartig und im wesentlichen wirbelschichtfrei zirkulieren.

2. Verfahren nach Anspruch 1, dadurch gekennzeichnet, daß die Zirkulation der Bewuchskörper (11) im Abwasser (7) des Belebungsbeckens (2) im wesentlichen linear in horizontaler Richtung verläuft.

3. Verfahren nach einem der vorstehenden Ansprüche, dadurch gekennzeichnet, daß die Zirkulation der Bewuchskörper (11) im Abwasser (7) des Belebungsbeckens (2) durch mindestens einen mechanischen Wasserverdränger bewirkt wird.

4. Verfahren nach einem der vorstehenden Ansprüche, dadurch gekennzeichnet, daß die schwebeartige Zirkulation der Bewuchskörper (11) im Abwasser (7) des Belebungsbeckens (2) durch in das Abwasser (7) eingeleitete Begasungen unterstützt wird.

0058974

5. Verfahren nach einem der vorstehenden Ansprüche, dadurch gekennzeichnet, daß die Bewuchskörper (11) mit dem Belebtschlamm im Abwasser (7) des Belebungsbeckens (2) horizontalringartig zirkulieren.

6. Verfahren nach einem der vorstehenden Ansprüche, dadurch gekennzeichnet, daß die Verweilzeit des Belebtschlamms im Abwasser (7) des Belebungsbeckens (2) wesentlich geringer ist als die Verweilzeit der schwebeartig zirkulierenden Bewuchskörper (11) und das der Belebtschlamm mit kleinem Schlammalter von den Bewuchskörpern (11) getrennt und hochlastanlagenähnlich als Überschußschlamm aus dem Belebungsbecken (2) ausgetragen wird.

7. Verfahren nach einem der vorstehenden Ansprüche, dadurch gekennzeichnet, daß die Trennung des Belebtschlamms von den Bewuchskörpern (11) bzw. deren Zurückhaltung im Abwasser (7) des Belebungsbeckens (2) mittels Siebung durchgeführt wird.

8. Verfahren nach einem der vorstehenden Ansprüche, dadurch gekennzeichnet, daß bei fortdauernder Zirkulation der Bewuchskörper (11) und Reduzierung bzw. Abschaltung einer Sauerstoffzufuhr eine Denitrifikation des Abwassers (7) im Belebungsbecken (2) durchgeführt wird.

9. Vorrichtung zur Abwasserreinigung nach einem der vorstehenden Ansprüche, dadurch gekennzeichnet, daß der Wasserverdränger zur Horizontalzirkulation der Bewuchskörper (11) im Belebungsbecken (2) als Propeller (9) ausgebildet ist.

10. Vorrichtung nach einem der vorstehenden Absprüche, dadurch gekennzeichnet, daß einem über einen Boden (13) des Belebungsbeckens (2) geführten Balken (14) ein Bewuchskörperauftriebschild (15) zugeordnet ist.

11. Vorrichtung nach einem der vorstehenden Ansprüche, dadurch gekennzeichnet, daß über dem Bewuchskörperauftriebschild (15) des Balkens (14) eine Belüfterkerze (16) angeordnet ist.

12. Vorrichtung nach einem der vorstehenden Ansprüche, dadurch gekennzeichnet, daß in einem Horizontalring des Belebungsbeckens (2) auch zur Unterstützung der Schwebezirkulation der Bewuchskörper (11) auf Abstand installierte Belüfter (12) angeordnet sind.

13. Mittel zur Abwasserreinigung nach einem der vorstehenden Ansprüche, dadurch gekennzeichnet, daß die Bewuchskörper (11) aus Kunststoff gebildet sind und ein spezifisches Gewicht aufweisen, das etwas größer ist als das des Abwassers (7).

14. Mittel nach einem der vorstehenden Ansprüche, dadurch gekennzeichnet, daß der Bewuchskörper (11') aus mindestens zwei mit Schlitzen (19) versehenen, kreuzförmig zusammengesteckten Bewuchsplatten (18) gebildet ist.

15. Mittel nach einem der vorstehenden Ansprüche, dadurch gekennzeichnet, daß der Bewuchskörper (11'') als Hohlkugel (20) ausgebildet ist, deren Wandung (21) von Löchern (22) durchsetzt ist.

16. Mittel nach einem der vorstehenden Ansprüche, dadurch gekennzeichnet, daß die Wandung (23) des Bewuchskörpers (11''') an der Außenfläche Mulden (24) aufweist.

17. Mittel nach einem der vorstehenden Ansprüche, dadurch gekennzeichnet, daß der Bewuchskörper (11''''') igel-

0058974

kugelförmig gestaltet ist und eine Vielzahl abstrebender Trägerteile (25) aufweist.

0058974

FIG.1

FIG. 2

FIG.3

# FIG.4

# FIG.5

# FIG.6

11'
17
19
18

11'
17
19
18

22
22
21
20
11''

# FIG.7

# FIG.8

24
11'''
23
24

25
11''''

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-2 071 591 (A.L. THOLIN) <br><br> * Seite 1, Spalte 2, Zeile 49 - Seite 2, Spalte 1, Zeile 10; Seite 2, Spalte 1, Zeile 46 - Spalte 2, Zeile 47; Seite 3, Spalte 1, Zeilen 54-72 * <br><br>--- | 1-4,6, 7,9 | C 02 F 3/12 <br> C 02 F 3/30 <br> C 02 F 3/10 |
| X | GB-A-1 225 789 (ESSO STANDARD) <br> * Seite 1, Zeilen 30-30; Seite 1, Zeile 91 - Seite 2, Zeile 34 * <br><br>--- | 1-3,5 | |
| P,X | DE-A-3 017 439 (F. SIEPMANN) <br><br> * Seite 3, Absatz 1; Seite 7, Zeile 20 - Seite 8, Absatz 1; Seite 9, Zeile 15 - Seite 10, Zeile 12; Seite 10, letzter Absatz - Seite 11, Absatz 1; Seite 12, Zeilen 1-14; Seite 13, Zeilen 10-20 * <br><br>--- | 1,2,5-8,13,15 | |
| P,X | DE-A-2 936 826 (H. GEIGER) <br> * Seite 1, Ansprüche 1,2; Seite 2, Anspruch 4 * <br><br>--- | 1,4 | RECHERCHIERTE SACHGEBIETE (Int. Cl. 3) <br><br> C 02 F |
| A | DE-A-2 427 550 (R. MENZEL) <br><br> * Ansprüche 1,4,5; Abbildungen 1-8 * <br><br>--- | 2,3,8-10 | |

*/.*

Der vorliegende Recherchenbericht wurde für alle Patentansprüche erstellt.

| Recherchenort | Abschlußdatum der Recherche | Prüfer |
|---|---|---|
| DEN HAAG | 04-05-1982 | TEPLY J. |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-1 609 004 (A. SCHREIBER) <br> * Anspruche 1-3 * | 10,11 | |
| A | DE-A-2 103 647 (J. CHOUN) <br><br> * Anspruche 1,2 * | 13,15, 16 | |
| A | DE-A-2 928 784 (HYDRO SYSTEM) <br> * Abbildungen 1,2 * | 17 | |
| A | DE-A-1 920 435 (PASSAVANT) <br> * Anspruche 1-3,6,10,11,14 * | 10,11 | |

RECHERCHIERTE SACHGEBIETE (Int. Cl. 3)

Der vorliegende Recherchenbericht wurde für alle Patentansprüche erstellt.

| Recherchenort <br> DEN HAAG | Abschlußdatum der Recherche <br> 04-05-1982 | Prüfer <br> TEPLY J. |
|---|---|---|